Europäisches Patentamt

European Patent Office

Office européen des brevets

(19)

(11) Numéro de publication : **0 010 027**
**B1**

(12) **FASCICULE DE BREVET EUROPÉEN**

(45) Date de publication du fascicule du brevet :
07.04.82

(21) Numéro de dépôt : 79400664.3

(22) Date de dépôt : 19.09.79

(51) Int. Cl.³ : **C 04 B  7/52**

(54) **Procédé de fabrication de ciments hydrauliques à base de clinker Portland et de sulfate de calcium résiduaire.**

(30) Priorité : 10.10.78 FR 7829586

(43) Date de publication de la demande :
16.04.80 (Bulletin 80/08)

(45) Mention de la délivrance du brevet :
07.04.82 Bulletin 82/14

(84) Etats contractants désignés :
**AT BE CH DE GB IT LU NL SE**

(56) Documents cités :
FR - A - 2 184 222
GB - A - 247 097
GB - A - 260 447
**CHEMICAL ABSTRACTS**
Vol. 80, n° 24, June 17, 1974, page 234, ref.
136847r
Columbus, Ohio, US

(73) Titulaire : **RHONE-POULENC INDUSTRIES**
**22 Avenue Montaigne**
**F-75008 Paris (FR)**

(72) Inventeur : **Communal, Jean-Noel**
**24, avenue Condorcet**
**F-69100 Villeurbanne (FR)**
Inventeur : **Filhol, Raymond**
**5, rue Camille de Neuville**
**F-69009 Lyon (FR)**

(74) Mandataire : **Dutruc-Rosset, Marie-Claude et al**
**RHONE POULENC Service Brevets Chimie et Polymè-**
**res Boîte Postale 753**
**F-75360 Paris Cedex 08 (FR)**

EP 0 010 027 B1

Imprimerie Jouve, 18, rue St-Denis, 75001 Paris, France

**0 010 027**

# Procédé de fabrication de ciments hydrauliques à base de clinker Portland et de sulfate de calcium résiduaire

La présente invention a pour objet un procédé de fabrication de ciments hydrauliques à base de clinker Portland et de sulfate de calcium résiduaire. Plus particulièrement, elle concerne la fabrication d'un ciment de type Portland à partir de clinker Portland et de gypse obtenu comme sous-produit de la fabrication de l'acide phosphorique dénommé par la suite phosphogypse.

On produit les ciments par calcination de matières premières appropriées en général des mélanges de calcaire et d'argile de manière à obtenir un « clinker » qui conduit par broyage au ciment Portland artificiel. Ce ciment est composé essentiellement de silicate tricalcique (3 CaO, SiO$_2$), de silicate bicalcique (2 CaO, SiO$_2$), d'aluminate tricalcique (3 CaO, Al$_2$O$_3$) et d'aluminoferrite tétracalcique (4 CaO, Al$_2$O$_3$, Fe$_2$O$_3$). L'aluminate tricalcique s'hydrate rapidement ce qui cause des perturbations au niveau de la prise globale du matériau. Aussi, on ajoute au clinker après refroidissement une certaine quantité de sulfate de calcium sous forme de gypse naturel qui joue le rôle de régulateur de prise en transformant d'abord l'aluminate tricalcique en ettringite ou trisulfoaluminate de calcium (3 CaO, Al$_2$O$_3$, 3 CaSO$_4$, 32 H$_2$O) qui évolue ensuite vers le monosulfoaluminate de calcium (3 CaO, Al$_2$O$_3$, CaSO$_4$, 12 H$_2$O).

Traditionnellement, on introduit le clinker et le gypse naturel dans un appareil à broyer, en général, un broyeur à boulets et l'on effectue le broyage simultané du clinker et du gypse naturel jusqu'à ce que le mélange soit finement divisé avec une surface spécifique relativement grande en vue d'obtenir le ciment à l'état fini.

Il est aussi connu d'après GB-A-260 447 de broyer séparément le gypse naturel et le clinker jusqu'à obtention de la finesse désirée et d'effectuer leur simple mélangeage après avoir refroidi le clinker finement divisé.

Lorsqu'on a voulu remplacer le gypse naturel par un sulfate de calcium résiduaire, sous-produit de fabrication que l'on essaie ainsi de valoriser, on a constaté des retards assez importants de la prise du ciment, provoqués par la présence des impuretés dans les sulfates de calcium résiduaires, plus spécialement dans les phosphogypses.

Pour pallier cet inconvénient, on a proposé de traiter le phosphogypse à l'aide d'un lait de chaux modifiant alors le comportement des impuretés.

On a aussi préconisé de faire un traitement thermique de gypse résiduaire transformant le gypse en semi-hydrate et/ou anhydrite soluble et faisant passer les impuretés sous forme insoluble et de procéder ensuite à l'hydratation du produit calciné en présence d'hydroxyde de calcium, d'oxyde de calcium ou de magnésium.

On a également purifié le gypse résiduaire en le calcinant sous pression normale ou sous pression de vapeur d'eau en mélange avec un composé tel que par exemple, un oxyde, hydroxyde ou carbonate de calcium ou de magnésium, un ciment etc..., puis en soumettant le produit ainsi obtenu à une hydratation afin d'obtenir le sulfate de calcium dihydratée (cf. brevet américain 3 159 497).

Par ailleurs, on a recommandé de transformer le gypse pulvérulent en « pellets » ou sous forme d'une bouillie avant son addition au clinker et de broyer ensuite le mélange (demande de brevet japonais 48-62913). On a aussi recommandé de transformer le gypse pulvérulent en pellets après l'avoir imprégné d'alcanolamine pour faciliter son broyage (demande de brevet japonais 47-49168) ou de le mettre sous la forme d'une bouillie avant son addition au clinker et de broyer ensuite le mélange (demande de brevet japonais 48-62913).

Par ailleurs, on connaît un procédé de préparation de ciment à prise retardée pour assises de chaussées qui consiste à broyer en commun ou séparément avant mélange, les constituants du ciment et un retardateur de prise consistant en une substance à base de P$_2$O$_5$ telle que gypse chimique, superphosphate simple, superphosphate triple.

Il a maintenant été trouvé un procédé de fabrication de ciment à base de clinker Portland et de sulfate de calcium résiduaire qui permet de réduire la trop grande action retardatrice des impuretés contenues dans le sulfate de calcium résiduaire et ceci est d'autant plus marqué que le sulfate de calcium est plus impur.

L'invention a donc pour objet un procédé de fabrication de ciment hydraulique à base de clinker Portland et de sulfate de calcium résiduaire caractérisé en ce que l'on effectue le mélange du clinker et du sulfate de calcium résiduaire :

— par un simple mélangeage desdits composants après broyage du clinker jusqu'à obtention de l'état de finesse du ciment désiré et éventuellement broyage par voie séparée du sulfate de calcium résiduaire ;

— ou par un co-broyage limité desdits composants qui consiste à introduire de manière différée le sulfate de calcium au cours du broyage du clinker seul, de manière à effectuer leur co-broyage pendant une durée limitée, ladite durée étant au moins égale à celle nécessaire à l'obtention d'un mélange homogène mais inférieure à la durée de broyage nécessaire pour amener le clinker à l'état de finesse du ciment désiré.

L'invention peut être exécutée selon deux modes de réalisation.

Le premier consiste à introduire le clinker dans un appareil à broyer et à réaliser son broyage jusqu'à obtention de l'état de finesse du ciment désiré ; à faire éventuellement le broyage par voie séparée du

2

**0 010 027**

sulfate de calcium résiduaire, à introduire le clinker et le sulfate de calcium résiduaire dans un mélangeur et à procéder à l'opération de mélange jusqu'à obtention d'un mélange homogène.

L'autre variante d'exécution comprend les opérations suivantes : on introduit le clinker dans un appareil à broyer ; on effectue le broyage du clinker seul pendant une fraction de la durée de broyage nécessaire pour l'amener à l'état de finesse du ciment désiré ; on introduit ensuite le sulfate de calcium résiduaire et l'on procède au co-broyage du clinker et de sulfate de calcium résiduaire pendant une durée limitée telle que définie précédemment.

Dans l'exposé qui suit de la présente invention, on entend sous le vocable :

— co-broyage total : l'introduction simultanée du clinker et du sulfate de calcium dans un appareil à broyer et leur co-broyage pendant toute la durée nécessaire pour amener le clinker à la finesse du ciment désiré ;

— co-broyage limité : l'introduction différée du sulfate de calcium au cours du broyage du clinker seul de manière à effectuer leur co-broyage pendant une durée limitée ;

— mélangeage : l'introduction du clinker et du sulfate de calcium dans un mélangeur afin d'assurer une répartition homogène desdits composants amenés au préalable à l'état de finesse désirée si nécessaire par broyage par voie séparée.

Par ciment, on entend le produit résultant au moins de la mouture de clinker Portland avec adjonction de sulfate de calcium. La durée du broyage du clinker est fonction de l'état de finesse du ciment désiré. En raison des faibles quantités de sulfate de calcium engagé qui n'excèdent jamais plus 7 % du poids de clinker, on considère que le ciment a approximativement l'état de finesse du clinker pour un même temps de broyage.

De plus, on définit par durée de broyage du clinker, l'intervalle de temps situé entre l'introduction du clinker dans l'appareil à broyer et la sortie du clinker à l'état de finesse du ciment désiré et par durée de co-broyage, l'intervalle de temps situé entre l'introduction du sulfate de calcium résiduaire dans l'appareil à broyer contenant déjà le clinker et la sortie du ciment à l'état de finesse désiré.

Enfin, on différencie l'appareil à broyer du mélangeur en ce sens que ce dernier répartit de manière homogène les particules constituant le mélange, sans destruction de leur granulométrie.

On a constaté de manière inattendue, que le fait d'effectuer un co-broyage limité du clinker et du sulfate de calcium permettait d'obtenir un ciment ayant des temps de prise notablement réduits par rapport à ceux d'un ciment préparé selon la technique usuelle de co-broyage total.

On a aussi noté de façon surprenante, que les temps de prise du ciment sont minimums lorsque l'on effectue un simple mélangeage du clinker et du sulfate de calcium ou un co-broyage pendant un temps de contrat ajusté à une fraction de la durée du broyage du clinker.

Comme matière première intervenant dans le procédé de l'invention, on fait appel à un clinker Portland. Par clinker Portland, on nomme (norme NF P. 15101) le produit renfermant en majeure partie des silicates de calcium, obtenu par cuisson jusqu'à fusion partielle (clinkérisation) d'un mélange dosé et homogénéisé de matières constituées principalement de chaux (CaO), de silice ($SiO_2$) et en proportions moindres d'alumine ($Al_2O_3$) et d'oxyde de fer ($Fe_2O_3$).

On peut mettre en œuvre selon le procédé de l'invention, les clinkers couramment fabriqués dans l'industrie cimentière selon des techniques bien connues. On peut utiliser un clinker obtenu selon n'importe quelle technique de fabrication qui peut être une voie humide, semi-humide, sèche ou semi-sèche.

Le clinker étant préparé à partir de produits naturels (argile calcaire), sa composition en constituants minéralogiques est comprise dans les limites suivantes :

de 50 à 75 % en poids de silicate tricalcique ($C_3S$)
de   7 à 30 % en poids de silicate bicalcique ($C_2S$)
de   0 à 18 % en poids d'aluminate tricalcique ($C_3A$)
de   4 à 20 % en poids d'aluminoferrite tétracalcique ($C_4AF$)

On utilisera pour désigner les différents constituants du clinker, les abréviations mentionnées entre parenthèses et ceci en accord avec la pratique générale de l'industrie cimentière.

Le pourcentage moyen des différents constituants est :

— 55 % en poids de $C_3S$
— 23 % en poids de $C_2S$
— 10 % en poids de $C_3A$
— 12 % en poids de $C_3AF$

Le clinker peut aussi contenir d'autres constituants en faibles quantités. On peut citer notamment la magnésie dont la teneur exprimée en MgO n'excède pas 5 % en poids du clinker, des alcalins $K_2O/Na_2O$ dont la teneur est de l'ordre de 1 %. L'analyse peut aussi révéler la présence de $SO_3$ dans le clinker en une quantité ne dépassant 1,5 % de son poids.

Le clinker se présente généralement sous forme de morceaux de dimensions de l'ordre du centimètre (1 à 5 centimètres) ce qui nécessite toujours un broyage afin de l'amener à l'état de finesse du ciment.

3

# 0 010 027

Pour ce qui est du sulfate de calcium résiduaire étant donné que c'est un sous-produit de fabrication, il contient généralement un certain nombre d'impuretés et la fabrication du ciment selon le procédé de l'invention permet d'inhiber partiellement l'action retardatrice des impuretés et de réduire les temps de prise du ciment.

On peut donc utiliser n'importe quel sulfate de calcium résiduaire mais dans le cas où le procédé de l'invention ne permettrait pas d'obtenir des temps de prise de ciment acceptables et comparables à ceux obtenus en employant le gypse naturel comme régulateur de prise, il y a lieu de le mettre en œuvre en combinaison avec d'autres opérations de purification ou de traitement chimique en particulier alcalin du sulfate de calcium résiduaire ou avec d'autres méthodes physico-chimiques permettant de réduire les temps de prise en particulier l'adjonction d'accélérateurs de prise bien connus et largement décrits dans la littérature (Arnold J. FRANKLIN Cement and Mortar Additives 2e édition Noyes Data Corporation New Jersey 1976).

Le sulfate de calcium intervenant donc dans la présente invention peut être sous différentes formes correspondantes à différents degrés d'hydratation.

C'est ainsi que l'on peut l'utiliser dans sa forme la plus hydratée dénommée gypse.

L'origine du gypse que l'on peut mettre en œuvre selon l'invention peut être fort diverse. Par exemple, il est possible d'utiliser aux fins de l'invention, du gypse humide synthétique provenant notamment :

— de la fabrication industrielle des acides par attaque d'un sel de calcium par l'acide sulfurique : parmi ces fabrications on peut citer celle de l'acide phosphorique par attaque du phosphate de calcium par l'acide sulfurique, de l'acide fluorhydrique par attaque de la fluorine par l'acide sulfurique, de l'acide borique et des acides organiques comme l'acide citrique, tartrique,

— de la fabrication du carbonate de sodium par action du chlorure de calcium résiduaire sur du sulfate de sodium,

— de l'activation des argiles par action du carbonate de calcium sur le sulfate d'aluminium résiduaire,

— de la neutralisation des effluents industriels acides par notamment de la chaux ou le carbonate de calcium.

Ces effluents acides peuvent avoir des origines diverses comme, par exemple, la fabrication industrielle de l'oxyde de titane par la voie sulfurique, les procédés de décapage dans la fabrication de l'acier, les procédés de raffinage, des sulfates de cuivre ou de zinc.

Plus particulièrement, on met en œuvre un phosphogypse obtenu comme sous-produit de la fabrication de l'acide phosphorique par attaque à l'aide d'acide sulfurique de minerais phosphatés comme par exemple du Maroc, du Togo, de Taïba, du Brésil, de la Floride, d'Afrique du Sud, d'Israël etc...

Il existe dans le phosphogypse des impuretés essentiellement tributaires de la roche phosphatée que l'on relève de deux types : des impuretés non cristallisées (acide phosphorique, roche phosphatée résiduelle, phosphates de calcium, de fer, d'aluminium, fluorures, silico-fluorures et complexes fluorés telle la chukrovite, la silice etc...) et des impuretés syncristallisées (phosphate bicalcique isotype du gypse, ions complexes alumino-fluorés $AlF_5^{2-}$..).

On utilisera avantageusement aux fins de l'invention un phosphogypse provenant de la fabrication de l'acide phosphorique telle que décrite dans les brevets français 1 125 849 et 1 181 150, soit tel qu'il est issu de la filtration du liquide d'attaque des phosphates par exemple au moyen du filtre décrit dans le brevet français 1 327 693, soit après avoir subi une étape de purification et éventuellement une étape de transformation des impuretés par voie chimique telle que par exemple, un traitement alcalin. L'étape de purification comprend généralement un lavage simple suivi d'une filtration ou d'un essorage, ou bien un hydrocyclonage suivi d'une infiltration ou d'un essorage, ou encore une flottation suivie d'une filtration ou d'un essorage. En ce qui concerne le détail des opérations de purification notamment par hydrocyclonage on peut opérer tel que décrit dans le brevet français 1 601 411.

On peut également traiter le phosphogypse par un agent basique tel que par exemple la chaux afin de l'amener à un pH d'environ 9 à 12. On se référera au brevet français 2 308 593 pour la description des conditions opératoires.

Le phosphogypse mis en œuvre selon le procédé de l'invention a une teneur en eau libre comprise entre 0 et 25 % en poids d'eau mais il est préférable pour des raisons de commodité de mise en œuvre, que la teneur en eau ne dépasse pas 10 % en poids.

On peut faire appel, pour la mise en pratique de l'invention, à n'importe quel phosphogypse de surface spécifique Blaine variant de 1 000 à 2 000 cm²/g et l'on peut aussi utiliser sans inconvénient un tel phosphogypse ayant subi des opérations de broyage jusqu'à 5 000 cm²/g.

A titre purement illustratif, on décrira le phosphogypse mis en œuvre aux fins de l'invention qui se présente sous forme d'une poudre ayant une surface spécifique Blaine de l'ordre de 1 500 cm²/g et un diamètre moyen de particules variant de 25 à 60 μ. On entend par diamètre moyen, un diamètre tel que 50 % des particules ont un diamètre supérieur ou inférieur au diamètre moyen.

Le phosphogypse peut être introduit dans la fabrication des ciments seul ou en mélange avec divers plâtres à base de sulfate de calcium semi-hydrate alpha (α) ou à base de sulfate de calcium semi-hydrate bêta (β), ou enfin avec de l'anhydrite III ou II. Ainsi on peut faire appel au plâtre ex-phosphogypse provenant notamment des procédés décrits ci-dessus. Diverses voies de séchage-calcination peuvent

4

être employées pour fabriquer du plâtre : parmi celles-ci on peut citer, un four tournant continu à chauffage indirect, un four tournant discontinu cyclique à chauffage indirect, un calcinateur à vis (cf. brevet français 1 601 411) ou un séchage pneumatique et une calcination en lit fluide (cf. demande de brevet français 2 311 764) ou une calcination de type pneumatique réalisée dans un appareil du type de celui décrit dans le brevet français 2 257 326.

Le phosphoplâtre utilisé peut être mis en œuvre tel qu'obtenu après calcination et présente alors une surface spécifique Blaine variant de 700 à 2 500 cm²/g ou après avoir subi un broyage conduisant ainsi à des surfaces spécifiques Blaine de 2 500 à 7 000 cm²/g.

La quantité de phosphoplâtre adjointe au phosphogypse est limitée par la fausse prise de ciment et doit être définie pour chaque clinker. Elle ne doit pas dépasser 80 % du poids de phosphogypse.

D'une manière préférentielle, on utilise comme régulateur de prise, un sulfate de calcium résiduaire hydraté et encore plus préférentielle on le choisit à base de gypse.

La quantité de sulfate de calcium résiduaire à introduire dans le clinker est fonction des propriétés recherchées.

Habituellement, elle est telle que le pourcentage en poids de $SO_3$ dans le ciment obtenu varie de 1 à 4 % en poids.

La quantité de sulfate de calcium ajoutée doit être au plus égale à celle qui porterait le teneur en anhydride sulfurique $SO_3$ au taux maximal de 4 %.

Pour déterminer ladite quantité, il y a lieu de tenir compte du sulfate préexistant contenu dans le clinker.

On peut éventuellement calculer la teneur optima de $SO_3$ dans un ciment, qui varie avec la nature du clinker, en utilisant la formule de LERCH :

$X = (0,0933 \times A) + (1,7105 \times B) + (0,09406 \times C) + 1,2288$ dans laquelle les divers symboles représentent :

$X$ : le pourcentage de $SO_3$ exprimé par rapport au poids du ciment.
$A$ : le pourcentage $C_3A$ exprimé par rapport au poids du clinker.
$B$ : le pourcentage de $Na_2O$ exprimé par rapport au poids du clinker.
$C$ : le pourcentage de $K_2O$ exprimé par rapport au poids du clinker.

D'un point de vue pratique, on effectue le dosage du $SO_3$ contenu dans le clinker par analyse chimique et on ajuste la quantité de sulfate de calcium à ajouter de manière à obtenir la teneur désirée de $SO_3$ dans le ciment.

Selon un premier mode de réalisation pratique de l'invention, on réalise le broyage du clinker seul qui peut être effectué dans les dispositifs usuels à cet effet par exemple des broyeurs à boulets, un tube broyeur ou un broyeur compound.

La durée du broyage de clinker est telle que l'on amène le clinker à l'état de finesse désirée qui est approximativement celle du ciment à obtenir dont la surface spécifique Blaine varie de 1 500 à 5 000 cm²/g.

D'autre part, on broie séparément le sulfate de calcium si nécessaire. Dans le cas du phosphogypse, ce dernier se trouvant généralement sous forme pulvérulente n'a pas besoin d'être broyé.

On peut éventuellement procéder au tamisage du sulfate de calcium utilisé.

On introduit ensuite le clinker et le sulfate de calcium dans un mélangeur qui peut être tout appareil permettant l'obtention d'un mélange homogène sans destruction de la granulométrie. On peut citer, par exemple, la classe des mélangeurs à tambour.

La durée de l'opération est fonction de l'appareil utilisé ainsi que de la nature des constituants à mélanger et peut être aisément déterminée par l'homme de métier par le jeu de simples opérations d'exécution.

Un autre mode d'exécution de l'invention consiste à introduire le clinker seul dans un appareil à broyer, en général, un broyeur à boulets.

Au cours du broyage du clinker, on introduit le sulfate de calcium résiduaire à un moment tel que la durée du co-broyage du clinker et du sulfate de calcium soit de durée limitée.

L'intervalle définissant la durée de co-broyage présente comme borne supérieure une durée de co-broyage inférieure à la durée de broyage nécessaire pour amener le clinker à l'état de finesse du ciment désiré.

La borne inférieure est fixée par le temps nécessaire à l'obtention d'un mélange homogène.

On peut traduire l'invention de la manière suivante :

au temps $t_1$ : introduction du clinker dans l'appareil à broyer.
au temps $t_2$ : introduction du sulfate de calcium résiduaire dans l'appareil à broyer.
au temps $t_3$ : obtention du ciment à l'état de finesse désirée.
$t_3 - t_1$ représente la durée du broyage du clinker.
$t_3 - t_2$ représente la durée du co-broyage du clinker et du sulfate de clacium résiduaire.

La détermination de $t_3$ est fonction de la finesse du ciment à obtenir. Pour simplifier son évaluation, on considère que le clinker et le ciment ont même état de finesse dans la mesure où le sulfate de calcium se présente sous forme d'une poudre fine.

La détermination de $t_2$ est fonction de la qualité du ciment recherchée en particulier le temps de prise souhaité.

On peut définir $t_3$ à l'aide d'expériences simples à la portée de l'homme de l'art, et $t_2$ est choisi en relation avec le temps de prise souhaité pour chaque couple clinker, sulfate de calcium résiduaire.

Des durées de broyage et co-broyage sont définies dans les exemples. Il est évident que ces durées sont données à titre indicatif et que l'on peut les extrapoler à l'échelle industrielle.

Le procédé de l'invention se prête tout à fait bien à sa mise en œuvre en continu.

Les ciments préparés selon le procédé de l'invention et à titre comparatif sont soumis à des essais mécaniques effectués sur mortiers présentant la constitution suivante :

|  |  |
|---|---|
| — sable NF P 15.403 | 1 350 grammes |
| — ciment à tester | 450 grammes |
| — eau | 225 grammes EC = 0,5 |

La confection du mortier est faite selon la norme NF 15403.

Les divers essais sont réalisés comme suit :

### 1. Mesure de l'étalement du mortier frais ou « Flow Test »

La fluidité du mortier est mesurée par l'étalement du mortier que l'on a préalablement moulé dans un tronc de cône de diamètre de base de 8 cm, de diamètre supérieur 7 cm et de hauteur 4 cm. Le mortier est placé sur une table à choc que l'on soumet à 15 chocs à raison de 1 choc par seconde ; le choc est provoqué par une chute de 15 mm de hauteur. L'étalement est exprimé en centimètres et correspond au diamètre moyen de la galette obtenue après les 15 chocs.

### 2. Mesure du temps de début de prise

Le début de prise est le temps au bout duquel une aiguille calibrée et chargée (NF P 15.414) ne peut plus pénétrer jusqu'au fond du récipient contenant la pâte pure c'est l'essai Vicat (NF P 15.431).

### 3. Mesure des résistances en flexion et en compression

Ces mesures sont effectuées selon la norme NF P 15. 451. Les résistances sont déterminées sur des éprouvettes de dimensions $4 \times 4 \times 16$ cm conservées tout d'abord 24 heures dans une enceinte à 20 °C et 100 % d'humidité relative, puis immergées dans un bac rempli d'eau thermostatée à 20 °C jusqu'à la date de l'essai.

— Pour la flexion : l'éprouvette est posée sur deux appuis à rouleau de 10 mm de diamètre distants de 106,7 mm un troisième rouleau de même diamètre équidistant de deux autres transmet une charge que l'on fait croître de 5 daN/s.

La résistance à la flexion correspondant à la rupture de l'éprouvette est exprimée en kg/cm$^2$.

— Pour la compression : la mesure s'effectue sur les deux morceaux d'éprouvette issus de la rupture à la flexion.

La compression est transmise par deux plaques de métal dur d'au moins 10 mm d'épaisseur, 40 mm de largeur et 40 mm de longueur. On fait croître la charge jusqu'à la rupture à une vitesse telle que l'accroissement de contrainte soit de 15 kg/cm$^2$/s. Le résultat est exprimé en kg/cm$^2$.

Les chiffres donnés sont la moyenne des résultats de 3 éprouvettes cassées en flexion et donc de 6 mesures en compression.

On se référera maintenant pour donner une compréhension plus complète de la présente invention aux exemples 1 à 9 pour la mettre en pratique.

A titre de comparaison, on réalise un certain nombre d'essais. Les essais $A_1$, $B_1$ et $A_2$, $B_2$ sont donnés à titre d'essai-témoin et concernent respectivement la préparation d'un ciment à partir de clinker et de gypse naturel selon les techniques de mélangeage de l'invention et de co-broyage total. Les essais C à K mettent en évidence les caractéristiques d'un ciment obtenu en mettant en œuvre un sulfate de calcium résiduaire selon le procédé connu de co-broyage total.

### ESSAI A

Cet essai met en évidence les temps de prise d'un ciment préparé en utilisant comme régulateur de prise le gypse naturel.

On emploie dans le présent essai un clinker de ciment Portland référencié VICAT Montalieu n° 4 qui contient les 4 oxydes principaux dans les proportions suivantes :

|  |  |
|---|---|
| CaO total | 62,9 % |
| SiO$_2$ | 20,1 % |

6

# 0 010 027

| | |
|---|---|
| $Al_2O_3$ | 6,3 % |
| $Fe_2O_3$ | 2,5 % |

Le pourcentage de $SO_3$ dosé dans le clinker est de 1,3 %.

Pour des commodités de manipulation, on réalise le pré-broyage du clinker, dans un broyeur à percussion FORPLEX (F. 00) (marque déposée) de telle sorte que tous les granules du clinker traversent un tamis dont les ouvertures de mailles sont de 4 millimètres.

Le sulfate de calcium mis en œuvre est un gypse naturel d'origine VICAT Montalieu dont l'analyse chimique est la suivante :

| | |
|---|---|
| $CaSO_4$ exprimé en $SO_3$ | 43,1 % |
| $SiO_2$ | 1,6 % |
| MgO | 1,8 % |
| $P_2O_5$ total | 37 PPM |
| Fluor total | 19 PPM |

On prépare un ciment à partir du clinker VICAT Montalieu n° 4 et du gypse naturel selon les deux voies de préparation suivantes :

ESSAI $A_1$ : Technique de mélangeage :

On introduit 959 g de clinker VICAT Montalieu n° 4 dans un broyeur à boulets. Le broyage est effectué en plaçant sur deux rouleaux tournants à 70 t/mn une jarre en porcelaine de 4 litres PROLABO (réf. 0917572) contenant une charge de billes et de cylpebs en acier contenant 12 % de chrome.

Chaque charge est composée de :

7 130 g de billes de 25 mm de diamètre
680 g de billes de 12 mm de diamètre
680 g de billes de 10 mm de diamètre
1 940 g de cylpebs de 20 mm de long et 20 mm de diamètre

On effectue le broyage du clinker pendant une durée de 1 h 15 mn. Le clinker obtenu a une surface spécifique Blaine de 2 950 $cm^2/g$ (mesurée selon la norme NF X 11-501).

Afin d'amener le gypse naturel à une surface spécifique Blaine comparable à celle du phosphogypse, on effectue son broyage dans le broyeur FORPLEX précité : le gypse naturel utilisé présente alors une surface spécifique Blaine de 1 150 $cm^2/g$.

On réalise le mélangeage de 959 g de clinker VICAT Montalieu n° 4 et de 41 g de gypse naturel dans un mélangeur de type RED-DEVIL (5100 PAINT CONDITIONER) : la durée de l'opération est de 30 minutes.

On obtient un ciment sur lequel on effectue les tests de mortiers définis ci-dessus.

Les résultats sont consignés dans le tableau I ci-après.

On note un temps de début de prise de 4 h 15 mn et une résistance à la compression mesurée au bout de 24 heures de 72 $kg/cm^2$.

On prépare le ciment à partir des mêmes constituants selon la voie traditionnelle du co-broyage total.

ESSAI $A_2$ : Technique du co-broyage total :

Dans le broyeur à boulets PROLABO, on introduit 959 g de clinker VICAT Montalieu n° 4 et 41 g de gypse naturel.

On effectue un co-broyage des deux composants pendant une durée totale de 1 h 30 mn.

Les résultats des tests effectués sur le ciment ainsi obtenu sont rassemblés dans le tableau I ci-après.

## ESSAI B

On effectue la préparation d'un ciment selon les conditions décrites dans l'essai précédent à cela près que l'on change la nature du clinker.

On part d'un clinker de ciment Portland référencé VICAT St EGREVE n° 1 qui contient les 4 oxydes principaux dans les proportions suivantes :

| | |
|---|---|
| CaO total | 57,2 % |
| $SiO_2$ | 22,2 % |
| $Al_2O_3$ | 3,4 % |
| $Fe_2O_3$ | 4,8 % |

Le pourcentage de $SO_3$ dosé dans le clinker est de 0,3 %.

Le clinker est pré-boyé de sorte qu'il n'y ait aucune particule retenue sur un tamis ayant une

7

ouverture de mailles de 4 millimètres.

Le sulfate de calcium utilisé est du gypse naturel dont la composition est donnée dans l'essai A.

Le ciment est préparé selon les modes de réalisation suivants :

ESSAI $B_1$ : Technique de mélangeage :

Dans un broyeur à boulets PROLABO, on introduit 956 g de clinker VICAT St EGREVE n° 1.

On effectue le broyage du clinker jusqu'à obtention d'une surface spécifique Blaine de 3 200 cm²/g.

Par ailleurs, on broie le gypse naturel afin de l'amener à une surface spécifique Blaine de 3 500 cm²/g.

On réalise le mélangeage de 956 g de clinker et de 44 g de gypse naturel dans un mélangeur de type RED-DEVIL pendant une durée de 30 mn. On obtient un ciment qui présente une surface spécifique Blaine de 3 250 cm²/g.

ESSAI $B_2$ : Technique de co-broyage total :

Dans un broyeur à boulets PROLABO, on introduit 956 g de clinker VICAT St EGREVE n° 1 et 44 g de gypse naturel.

On effectue l'opération de co-broyage des deux composants pendant une durée de 1 h 30 mn.

Les résultats obtenus aux différents tests effectués sur mortiers sont consignés dans le tableau I suivant :

Tableau I

| Réf. essai | CaSO₄ | | Clinker | | Préparation du ciment (durée) | | | Ciment | | Flow test cm | Temps de prise | | Résistance Compression / Résistance Flexion | |
|---|---|---|---|---|---|---|---|---|---|---|---|---|---|---|
| | Nature | s.s.B. cm²/g | Nature | s.s.B cm²/g | Broyage clinker | Co-broyage clinker CaSO₄ | Mélan-geage | % SO₃ | s.s.B cm²/g | | Début | Fin | kg/cm² 24 h | |
| A₁ | Gypse naturel | 1 150 | Vicat Monta-lieu n° 4 | 2 950 | 1 h 15 | | 0 h 30 | 3 | 2 900 | 15,9 | 4 h 15 | 8 h | 72 | 25 |
| A₂ | Gypse naturel | 1 150 | Vicat Monta-lieu n° 4 | | | 1 h 30 | | 3 | 3 150 | 16,1 | 4 h 15 | 7 h 30 | 79 | 25 |
| B₁ | Gypse naturel | 3 500 | Vicat St Egrève n° 1 | 3 200 | 1 h 45 | | 0 h 30 | 2,2 | 3 250 | 16,7 | 5 h | 7 h 45 | 96 | 24 |
| B₂ | Gypse naturel | 3 500 | Vicat St Egrève n° 1 | | | 1 h 30 | | 2,2 | 3 400 | 17,2 | 4 h 30 | 7 h 45 | 116 | 25 |

Il ressort de l'analyse de ce tableau que le procédé selon l'invention ne conduit à aucun gain sur les temps de prise lorsque l'on utilise le gypse naturel comme régulateur de prise du ciment.

Par contre, les exemples suivants mettent en évidence la réduction du temps de prise obtenue en préparant le ciment selon l'invention lorsque l'on met en œuvre un sulfate de calcium résiduaire contenant des impuretés.

Dans les essais de co-broyage limité, le phosphogypse est séché mais à l'échelle industrielle, il est préférable de l'introduire sous forme humide car dans un broyeur industriel la température est telle (80°-95 °C) que la présence d'eau est favorable car elle évite sa transformation en phosphoplâtre.

EXEMPLE 1

On prépare un ciment à partir du clinker VICAT Montalieu n° 4 défini dans l'essai précédent et comme sulfate de calcium, un phosphogypse résultant de l'attaque à l'aide d'acide sulfurique d'un minerai phosphaté d'origine MAROC et ayant subi une purification par hydrocyclonage.

Le phosphogypse utilisé a la composition chimique suivante :

| % de CaSO$_4$ exprimé en SO$_3$ | 45,1 % |
|---|---|
| % de Fluor total | 0,73 % |
| % de P$_2$O$_5$ total | 1,29 % |

Il possède une surface spécifique Blaine de 1 500 cm²/g et les dimensions de toutes ses particules sont inférieures à 200 μ.

Dans tous les essais, il est mis en œuvre après séchage à poids constant à 50 °C.

On confectionne le ciment selon les deux variantes d'exécution de l'invention.

a) Technique du co-broyage limité

Dans un broyeur à boulets PROLABO, on introduit 961 g de clinker VICAT Montalieu n° 4.

On commence le broyage du clinker seul et au bout d'une heure, on introduit 39 g de phosphogypse hydrocycloné.

On fait du co-broyage pendant 15 minutes.

On obtient un ciment qui présente une surface spécifique Blaine de 3 000 cm²/g.

b) Technique du mélangeage

Dans un broyeur à boulets PROLABO, on introduit 961 g de clinker VICAT Montalieu n° 4.

On effectue le broyage du clinker pendant une durée de 1 h 15 mn. Le clinker obtenu a une surface spécifique Blaine de 3 000 cm²/g.

Le phosphogypse hydrocycloné ayant la finesse suffisante, on réalise le mélangeage de 961 g de clinker et de 39 g de phosphogypse hydrocycloné dans un mélangeur du type RED-DEVIL et pendant une durée de 30 mn.

On obtient un ciment qui présente une surface spécifique Blaine de 2 800 cm²/g.

A titre comparatif, on prépare un ciment selon la technique traditionnelle de co-broyage total en partant des mêmes matières premières décrites précédemment.

ESSAI C

Dans un broyeur à boulets, on introduit simultanément 961 g de clinker VICAT n° 4 et 39 g de phosphogypse hydrocycloné.

On effectue le co-broyage desdits composants pendant une durée de 1 h 15 mn.

On obtient un ciment ayant une surface spécifique Blaine de 3 000 cm²/g.

On soumet les ciments obtenus selon les voies préalablement décrites, aux différents tests effectués sur mortiers.

Les résultats obtenus sont consignés dans le tableau II suivant :

Tableau II

| Réf. essai ou ex. | CaSO$_4$ Nature | CaSO$_4$ s.s.B cm²/g | Clinker Nature | Clinker s.s.B cm²/g | Préparation du ciment (durée) Broyage clinker | Préparation du ciment (durée) Co-broyage clinker CaSO$_4$ | Préparation du ciment (durée) Mélangeage | Ciment % SO$_3$ | Ciment s.s.B cm²/g | Flow test cm | Temps de prise Début | Temps de prise Fin | Résistance Compression kg/cm² 24 h | Résistance Flexion |
|---|---|---|---|---|---|---|---|---|---|---|---|---|---|---|
| 1a | P G hydro-cycloné | 1 500 | Vicat Monta-lieu n° 4 | | 1 h | 0 h 15 | | 3 | 3 000 | 16,8 | 5 h 30 | 7 h 30 | 151 | 35 |
| 1b | P G hydro-cycloné | 1 500 | Vicat Monta-lieu n° 4 | 3 000 | 1 h 15 | | 0 h 30 | 3 | 2 800 | 15,6 | 4 h 45 | 8 h | 141 | 29 |
| C | P G hydro-cycloné | 1 500 | Vicat Monta-lieu n° 4 | | | 1 h 15 | | 3 | 3 000 | 15,4 | 7 h 45 | 9 h 45 | 123 | 32 |

P G = Phosphogypse

9

La comparaison des essais A₂, B₂ et C décrits respectivement dans les tableaux I et II met en évidence l'action retardatrice des impuretés contenues dans le phosphogypse.

L'étude du tableau II montre que la fabrication du ciment selon l'invention permet de réduire, de manière appréciable, les temps de prise du ciment par rapport au même ciment préparé de manière usuelle par co-broyage total.

## EXEMPLE 2

On prépare un ciment à partir de clinker du ciment Portland VICAT St EGREVE n° 1 tel que décrit dans l'essai B.

Le sulfate de calcium résiduaire utilisé est le phosphogypse hydrocycloné caractérisé dans l'exemple 1.

On réalise la préparation du ciment par mélangeage du clinker et du phosphogypse après avoir broyé le clinker par voie séparée.

Pour ce faire, dans un broyeur à boulets PROLABO, on introduit 1 000 g de clinker VICAT St EGREVE n° 1 et l'on effectue son broyage pendant une durée de 1 h 45 mn.

Le clinker obtenu a une surface spécifique Blaine de 3 300 cm²/g.

On réalise ensuite le mélangeage de 958 g de clinker et de 42 g de phosphogypse hydrocycloné pendant une durée de 30 mn.

On obtient du ciment ayant une surface spécifique Blaine de 3 300 cm²/g.

Les résultats des tests obtenus avec ce ciment sont indiqués dans le tableau III ci-après.

A titre comparatif, on effectue l'essai suivant :

## ESSAI D

On effectue le co-broyage du clinker VICAT St EGREVE n° 1 et du phosphogypse hydrocycloné pendant une durée totale de 1 h 30 mn.

Le ciment obtenu a une surface spécifique Blaine de 3 400 cm²/g.

Les résultats obtenus sont consignés dans le tableau III suivant :

Tableau III

| Réf. essai ou ex. | CaSO₄ Nature | CaSO₄ s.s.B cm²/g | Clinker Nature | Clinker s.s.B cm²/g | Préparation du ciment (durée) Broyage clinker | Préparation du ciment (durée) Co-broyage clinker CaSO₄ | Préparation du ciment (durée) Mélangeage | Ciment % SO₃ | Ciment s.s.B cm²/g | Flow test cm | Temps de prise Début | Temps de prise Fin | Résistance Compression kg/cm² 24 h | Résistance Flexion |
|---|---|---|---|---|---|---|---|---|---|---|---|---|---|---|
| 2 | P G hydro-cycloné | 1 500 | Vicat St Egreve n° 1 | 3 300 | 1 h 45 | | 0 h 30 | 2,2 | 3 300 | 15,0 | 6 h 30 | 9 h | 78 | 21 |
| D | P G hydro-cycloné | 1 500 | Vicat St Egreve n° 1 | | | 1 h 30 | | 2,2 | 3 400 | 17,0 | 9 h 45 | > 11 h | 78 | 21 |

P G = Phosphogypse

On note un gain sur le temps de début de prise de 3 heures.

## EXEMPLE 3

On part, dans le présent exemple, du clinker VICAT Montalieu n° 4 défini dans l'essai A et d'un phosphogypse hydrocycloné ayant subi un traitement à la chaux ajoutée au phosphogypse à raison de 0,6 %.

Sa composition chimique est la suivante :

| | |
|---|---|
| % de CaSO₄ exprimé en SO₃ | 45,1 |
| % de Fluor total | 0,78 |

0 010 027

% de P$_2$O$_5$ total        1,1

Il présente une surface spécifique Blaine de 1 500 cm$^2$/g.
Le ciment est préparé selon les trois modes d'exécution suivants :

a) Technique du co-broyage limité

On broie le clinker seul pendant 45 minutes, on introduit le phosphogypse et on fait du co-broyage pendant 30 mn.

b) Technique du mélangeage

On broie le clinker seul jusqu'à obtention de la finesse du ciment désirée.
On exécute le mélangeage du clinker et du phosphogypse pendant 30 mn.

ESSAI E

On conduit un essai comparatif en partant des mêmes matières premières mais en effectuant un co-broyage simultané du clinker et du phosphogypse pendant 1 h 15 mn.
Les résultats obtenus lors des tests des différents ciments sont rassemblés dans le tableau IV :

Tableau IV

| Réf. essai ou ex. | CaSO$_4$ | | Clinker | | Préparation du ciment (durée) | | | Ciment | | Flow test cm | Temps de prise | | Résistance Compression | Résistance Flexion |
|---|---|---|---|---|---|---|---|---|---|---|---|---|---|---|
| | Nature | s.s.B cm$^2$/g | Nature | s.s.B cm$^2$/g | Broyage clinker | Co-broyage clinker CaSO$_4$ | Mélan-geage | % SO$_3$ | s.s.B cm$^2$/g | | Début | Fin | kg/cm$^2$ 24 h | |
| 3a | P G traité à la chaux | 1 500 | Vicat Monta-lieu n° 4 | | 0 h 45 | 0 h 30 | | 3 | 3 050 | 16,8 | 4 h 15 | 8 h | 120 | 33 |
| 3b | P G traité à la chaux | 1 500 | Vicat Monta-lieu n° 4 | 2 950 | 1 h 35 | | 0 h 30 | 3 | 2 950 | 15,9 | 4 h 15 | 8 h 30 | 110 | 30 |
| E | P G traité à la chaux | 1 500 | Vicat Monta-lieu n° 4 | | | 1 h 15 | | 3 | 3 000 | 16,2 | 6 h 30 | 9 h 30 | 120 | 28 |

P G = Phosphogypse

On aboutit aux mêmes conclusions que précédemment.

EXEMPLES 4 à 6

Ces exemples illustrent l'utilisation comme régulateur de prise d'un mélange à base de phosphogypse et de phosphoplâtre en proportions variables.
On prépare un ciment à partir du clinker référencé VICAT Montalieu n° 4 défini dans l'essai A et du même phosphogypse que celui de l'exemple précédent. Le phosphoplâtre mis en œuvre résulte de la calcination du même phosphogypse.
On réalise des mélanges de phosphogypse et de phosphoplâtre contenant des quantités croissantes de phosphoplâtre 20, 50, 80 % en poids du mélange.
On fabrique le ciment selon la technique de mélangeage de l'invention telle que décrite précédemment et à titre comparatif selon la voie traditionnelle.
Les différents résultats sont rassemblés dans le tableau V :

11·

Tableau V

| Réf. essai ou ex. | CaSO₄ | | Clinker | | Préparation du ciment (durée) | | | Ciment | | Flow test cm | Temps de prise | | Résistance Compression Résistance Flexion | |
|---|---|---|---|---|---|---|---|---|---|---|---|---|---|---|
| | Nature | s.s.B cm²/g | Nature | s.s.B cm²/g | Broyage clinker | Co-broyage clinker CaSO₄ | Mélan- geage | % SO₃ | s.s.B cm²/g | | Début | Fin | kg/cm² 24 h | |
| 4 | 80 % PG 20 % PP | 1 500 | Vicat Monta- lieu n° 4 | 2 800 | 1 h 15 | | 30 mn | 3 | 2 900 | 16,9 | 4 h 00 | 7 h 15 | 110 | 26 |
| F | 80 % PG 20 % PP | 1 500 | | | | 1 h 15 | | 3 | 3 200 | 16,4 | 5 h 45 | 9 h 15 | 141 | 33 |
| 5 | 50 % PG 50 % PP | 1 500 | Vicat Monta- lieu n° 4 | 2 800 | 1 h 15 | | 30 mn | 3 | 2 800 | 16,0 | 4 h 45 | 6 h 30 | 117 | 29 |
| G | 50 % PG 50 % PP | 1 500 | | | | 1 h 15 | | 3 | 3 350 | 17,0 | 6 h 25 | 9 h 00 | 123 | 29 |
| 6 | 20 % PG 80 % PP | 1 500 | Vicat Monta- lieu n° 4 | 2 800 | 1 h 15 | | 30 mn | 3 | 2 850 | 16,5 | 5 h 45 | 8 h 30 | 110 | 32 |
| H | 20 % PG 80 % PP | 1 500 | | | | 1 h 15 | | 3 | 3 250 | 16,8 | 7 h 30 | 11 h 45 | 117 | 28 |

P G = Phosphogypse

P P = Phosphoplâtre

Quelle que soit la composition du mélange de phosphogypse et de phosphoplâtre, le procédé de l'invention conduit toujours à un gain de temps de prise de ciment.

EXEMPLES 7 à 9

Les exemples illustrent l'utilisation comme régulateur de prise de phosphogypse résultant de l'attaque à l'aide d'acide sulfurique des minerais d'origine diverse FLORIDE et TOGO.

Trois échantillons à tester présentent l'analyse granulométrique (réalisée par tamisage) suivante :

Phosphogypse ex. Floride  
  refus au tamis de               (échantillon 1)  
                                   200 $\mu$ : 0,2 %  
                                   630 $\mu$ : 0 %

Phosphogypse ex. Togo  
  refus au tamis de               (échantillon 2)  
                                   200 $\mu$ : 4 %  
                                   250 $\mu$ : 2,5 %  
                                   315 $\mu$ : 1,2 %  
                                   400 $\mu$ : 0,3 %  
                                   630 $\mu$ : 0,2 %  
                                   800 $\mu$ : 0 %

Phosphogypse ex. Togo  
  refus au tamis de               (échantillon 3)  
                                   200 $\mu$ : 1,3 %  
                                   315 $\mu$ : 0,8 %  
                                 500 $\mu$ : 0,3 %  
                           1 000 $\mu$ : <0,3 %  
                           (cette fraction est éliminée)

On emploie dans le présent exemple un clinker de ciment Portland référencé VICAT Montalieu n° 5 qui contient les quatre oxydes principaux dans les proportions suivantes :

CaO total                                                                 64,3 %

| | 22,2 % |
|---|---|
| SiO$_2$ | 22,2 % |
| Al$_2$O$_3$ | 6,0 % |
| Fe$_2$O$_3$ | 2,2 % |

Le pourcentage de SO$_3$ dosé dans le clinker est de 1,4 %.

On fabrique le ciment à partir de ce clinker et en ajoutant les différents échantillons de phosphogypse selon la technique de mélangeage de l'invention et à titre comparatif selon le procédé de co-broyage total. Les différents résultats obtenus sont consignés dans le tableau VI suivant :

Tableau VI

| Réf. essai ou ex. | CaSO$_4$ Nature | Clinker Nature | Préparation du ciment (durée) s.s.B cm²/g | Broyage clinker | Co-broyage clinker CaSO$_4$ | Mélan-geage | Ciment % SO$_3$ | s.s.B cm²/g | Flow test cm | Temps de prise Début | Fin | Résistance Compression kg/cm² 24 h | Résistance Flexion |
|---|---|---|---|---|---|---|---|---|---|---|---|---|---|
| 7 | P G ex. Floride (échantillon 1) | Vicat Monta-lieu n° 5 | 3 000 | 1 h 40 | | 0 h 30 | 3 | 3 000 | 15,9 | 5 h 00 | 9 h 45 | 123 | 28 |
| I | PG ex. Floride (échantillon 1) | Vicat Monta-lieu n° 5 | | | 1 h 20 | | 3 | 3 150 | 16 | 7 h 00 | 11 h 30 | 76 | 22 |
| 8 | P G ex. Togo (échantillon 2) | Vicat Monta-lieu n° 5 | 3 000 | 1 h 40 | | 0 h 30 | 3 | 3 000 | 15,4 | 5 h 25 | 9 h 45 | 117 | 28 |
| J | P G ex. Togo (échantillon 2) | Vicat Monta-lieu n° 5 | | | 1 h 20 | | 3 | 3 150 | 16,5 | 8 h 45 | >12 h 15 | 72 | 18 |
| 9 | P G ex. Togo (échantillon 3) | Vicat Monta-lieu n° 5 | 3 000 | 1 h 40 | | 0 h 30 | 3 | 3 000 | 15,4 | 6 h 00 | 10 h 00 | 119 | 26 |
| K | P G ex. Togo (échantillon 3) | Vicat Monta-lieu n° 5 | | | 1 h 20 | | 3 | 3 100 | 16 | 9 h 45 | 13 h 30 | 69 | 18 |

P G = Phosphogypse

Quelle que soit l'origine du phosphogypse, on observe toujours un gain de temps de prise du ciment obtenu selon l'invention par rapport à celui résultant du procédé de l'art antérieur.

L'invention s'applique à tout liant nécessitant du sulfate de calcium pour régulariser sa prise. On peut citer plus particulièrement tout ciment Portland sans constituant secondaire ou avec constituants secondaires tels que le laitier, les pouzzolanes ou les centres volantes ; tout ciment à base de laitier tels que les ciments métallurgiques mixtes, les ciments de haut-fourneau, les ciments de laitier au clinker. Le ciment hydraulique le plus employé est le ciment de Portland.

**Revendications**

1. Procédé de fabrication de ciment hydraulique à base de clinker Portland et de sulfate de calcium résiduaire caractérisé en ce que l'on effectue le mélange du clinker et du sulfate de calcium résiduaire :
— par un simple mélangeage desdits composants après broyage du clinker jusqu'à obtention de l'état de finesse du ciment désiré et éventuellement broyage par voie séparée du sulfate de calcium résiduaire ;

13

**0 010 027**

— ou pour un co-broyage limité desdits composants qui consiste à introduire de manière différée le sulfate de calcium au cours du broyage du clinker seul, de manière à effectuer leur co-broyage pendant une durée limitée, ladite durée étant au moins égale à celle nécessaire à l'obtention d'un mélange homogène mais inférieure à la durée de broyage nécessaire pour amener le clinker à l'état de finesse du ciment désiré.

2. Procédé selon la revendication 1, caractérisé en ce que l'on introduit le clinker dans un appareil à broyer et réalise son broyage jusqu'à l'obtention de l'état de finesse du ciment désiré ; que l'on fait éventuellement le broyage par voie séparée du sulfate de calcium résiduaire ; que l'on introduit le clinker et le sulfate de calcium résiduaire dans un mélangeur et procède à l'opération de mélange jusqu'à obtention d'un mélange homogène.

3. Procédé selon la revendication 1, caractérisé en ce que l'on introduit le clinker dans un appareil à broyer ; que l'on effectue le broyage du clinker seul pendant une fraction de la durée du broyage nécessaire pour l'amener à l'état de finesse du ciment désiré ; que l'on introduit ensuite le sulfate de calcium résiduaire ; que l'on procède au co-broyage du clinker et du sulfate de calcium résiduaire pendant une durée limitée telle que définie dans la revendication 1.

4. Procédé selon l'une des revendications 1 à 3, caractérisé en ce que la durée de broyage du clinker est telle que l'on obtienne un ciment ayant une surface spécifique Blaine de 1 500 à 5 000 cm$^2$/g.

5. Procédé selon l'une des revendications 1 à 4, caractérisé en ce que le sulfate de calcium résiduaire est un sulfate de calcium hydraté.

6. Procédé selon l'une des revendications 1 à 5, caractérisé en ce que le sulfate de calcium résiduaire est un gypse résiduaire.

7. Procédé selon l'une des revendications 1 à 6, caractérisé en ce que le sulfate de calcium résiduaire est un phosphogypse mis en œuvre seul ou en mélange avec un sulfate de calcium semi-hydraté ($\alpha$) ou un sulfate de calcium semi-hydraté ($\beta$) ou un anhydrite III ou un anhydrite II.

8. Procédé selon la revendication 6, caractérisé en ce que le sulfate de calcium résiduaire est un phosphogypse ayant subi une étape de purification et éventuellement une étape de transformation des impuretés par voie chimique.

9. Procédé selon la revendication 7 ou 8, caractérisé en ce que le sulfate de calcium résiduaire est un mélange de phosphogypse et de phosphoplâtre.

10. Procédé selon l'une des revendications 1 à 9, caractérisé en ce que la quantité de sulfate de calcium résiduaire à introduire dans le clinker est telle que la teneur en SO$_3$ du ciment varie de 1 à 4 % en poids.

11. Utilisation du procédé selon l'une des revendications 1 à 10, à la fabrication de ciments Portland.

## Claims

1. A method of manufacturing hydraulic cement based on Portland clinker and residual calcium sulphate characterised in that mixing of the clinker and the residual calcium sulphate is effected :
— by simply mixing said components after grinding of the clinker until the degree of fineness of the desired cement is obtained, and optionally grinding the residual calcium sulphate separately ; or
— by limited co-grinding of said components, which comprises deferred introduction of the calcium sulphate in the course of grinding of the clinker alone, so as to effect co-grinding thereof for a limited period of time, said period of time being at least equal to that required to produce a homogeneous mixture but being less than the grinding time required to grind the clinker to the degreee of fineness of the desired cement.

2. A method according to claim 1 characterised in that the clinker is introduced into a grinding apparatus and grinding thereof is effected until the degree of fineness of the desired cement is attained ; that the residual calcium sulphate is optionally ground separately ; that the clinker and the residual calcium sulphate are introduced into a mixer and the mixing operation is carried out until a homogenous mixture is obtained.

3. A method according to claim 1 characterised in that the clinker is introduced into a grinding apparatus ; the clinker is ground alone for a fraction of the grinding period required to grind it to the degree of fineness of the desired cement ; that the residual calcium sulphate is then introduced ; and the clinker and the residual calcium sulphate are subjected to co-grinding for a limited period of time as defined in claim 1.

4. A method according to one of claims 1 to 3 characterised in that the clinker grinding period is such as to produce a cement having a Blaine specific surface area of from 1 500 to 5 000 cm$^2$/g.

5. A method according to one of claims 1 to 4 characterised in that the residual calcium sulphate is a hydrated calcium sulphate.

6. A method according to one of claims 1 to 5 characterised in that the residual calcium sulphate is a residual gypsum.

7. A method according to one of claims 1 to 6 characterised in that the residual calcium sulphate is a phosphogypsum which is used alone or mixed with a hemihydrated ($\alpha$) calcium sulphate, a hemihydrated ($\beta$) calcium sulphate, an anhydrite III or an anhydrite II.

14

**0 010 027**

8. A method according to claim 6 characterised in that the residual calcium sulphate is a phosphogypsum which has been subjected to a purification step and optionally a chemical, impurity-transformation step.

9. A method according to claim 7 or claim 8 characterised in that the residual calcium sulphate is a mixture of phosphogypsum and phosphoplaster.

10. A method according to one of claims 1 to 9 characterised in that the amount of residual calcium sulphate to be introduced into the clinker is such that the $SO_3$ content of the cement varies from 1 to 4 % by weight.

11. Use of the method according to one of claims 1 to 10, for the production of Portland cements.

**Ansprüche**

1. Verfahren zur Herstellung von hydraulischem Zement auf der Basis von Portlandklinker und synthetischem Calciumsulfat, dadurch gekennzeichnet, daß man die Mischung des Klinkers und synthetischen Calciumsulfates herstellt :
— durch eine einfache Mischung der genannten Komponenten nach Mahlung des Klinkers bis zum Erhalt des gewünschten Feinheitsgrades des Zementes und gegebenenfalls Mahlung des synthetischen Calciumsulfates auf getrenntem Wege ;
— oder durch eine begrenzte gemeinsame Vermahlung der genannten Bestandteile, die darin besteht, das Calciumsulfat auf unterschiedliche Weise im Verlauf der alleinigen Mahlung des Klinkers so einzugeben, daß ihre gemeinsame Vermahlung für eine begrenzte Zeitspanne erreicht wird, wobei die genannte Zeitspanne mindestens gleich der zum Erhalt einer homogenen Mischung, aber kleiner als die notwendige Mahldauer ist, die benötigt wird, um den Klinker in den gewünschten Feinheitsgrad des Zementes zu überführen.

2. Verfahren nach Anspruch 1, dadurch gekennzeichnet, daß man den Klinker in eine Mahlvorrichtung einbringt und seine Mahlung bis zum Erhalt des gewünschten Feinheitsgrades des Zementes durchführt ; daß man gegebenenfalls die Zerkleinerung des synthetischen Calciumsulfates auf getrenntem Wege durchführt ; daß man den Klinker und das synthetische Calciumsulfat in einen Mischer einbringt und einen Mischvorgang bis zum Erhalt einer homogenen Mischung bewirkt.

3. Verfahren nach Anspruch 1, dadurch gekennzeichnet, daß man den Klinker in eine Mahlvorrichtung einbringt ; daß man die alleinige Mahlung des Klinkers in einem Bruchteil der Mahldauer durchführt, die notwendig ist, um den gewünschten Feinheitsgrad des Zementes zu erhalten ; daß man anschließend das synthetische Calciumsulfat einführt ; daß man eine gemeinsame Zerkleinerung des Klinkers und des synthetischen Calciumsulfats über eine wie im Anspruch 1 definierte begrenzte Zeitspanne bewirkt.

4. Verfahren nach einem der Ansprüche 1 bis 3, dadurch gekennzeichnet, daß die Mahldauer des Klinkers so gewählt ist, daß man einen Zement mit einer spezifischen Oberfläche nach Blaine von 1 500 bis 5 000 cm²/g erhält.

5. Verfahren nach einem der Ansprüche 1 bis 4, dadurch gekennzeichnet, daß das synthetische Calciumsulfat ein hydratisiertes Calciumsulfat ist.

6. Verfahren nach einem der Ansprüche 1 bis 5, dadurch gekennzeichnet, daß das synthetische Calciumsulfat ein Abfallgips ist.

7. Verfahren nach einem der Ansprüche 1 bis 6, dadurch gekennzeichnet, daß das synthetische Calciumsulfat ein Phosphogips ist, der allein oder in Mischung mit einem α-Calciumsulfathalbhydrat oder einem β-Calciumsulfathalbhydrat oder einem Anhydrit III oder einem Anhydrit II eingesetzt wird.

8. Verfahren nach Anspruch 6, dadurch gekennzeichnet, daß das synthetische Calciumsulfat ein Phosphogips ist, der einem Reinigungsprozeß und eventuell einem Prozeß zur Umwandlung von Verunreinigungen auf chemischem Wege unterworfen worden ist.

9. Verfahren nach Anspruch 7 oder 8, dadurch gekennzeichnet, daß das synthetische Calciumsulfat eine Mischung aus Phosphogips und Phosphoplaster ist.

10. Verfahren nach einem der Ansprüche 1 bis 9, dadurch gekennzeichnet, daß die Menge des synthetischen Calciumsulfates, das in den Klinker eingeführt wird so groß ist, daß der $SO_3$-Gehalt des Zementes zwischen 1 und 4 Gewichtsprozent variiert.

11. Verwendung des Verfahrens nach einem der Ansprüche 1 bis 10 zur Herstellung von Portlandzementen.